# EUROPEAN PATENT APPLICATION

(11) **EP 4 597 116 A1**
(43) Date of publication of application: **06.08.2025**
(21) Application number: 25153464.0
(22) Date of filing: 23.01.2025
(51) Int. Cl.: G01N 35/02, G01N 35/04, B08B 9/20, B08B 9/32, G01N 35/00, B08B 13/00, G01N 35/10

(54) **TURNTABLE MECHANISM, CLEANING DEVICE AND SAMPLE ANALYZER**

(30) Priority: 03.02.2024 CN 202410157042
(71) Applicant: Shenzhen New Industries Biomedical Engineering Co., Ltd., Shenzhen, Guangdong 518122 (CN)
(72) Inventor: RAO, Wei, Guangdong, 518122 (CN); YIN, Li, Guangdong, 518122 (CN); ZHU, Liang, Guangdong, 518122 (CN); HU, Yi, Guangdong, 518122 (CN); TANG, Junhui, Guangdong, 518122 (CN); FENG, Shiming, Guangdong, 518122 (CN); LIU, Yu, Guangdong, 518122 (CN); ZOU, Jialiang, Guangdong, 518122 (CN); LI, Jiang, Guangdong, 518122 (CN); XIONG, Yingchao, Guangdong, 518122 (CN); QIU, Zefeng, Guangdong, 518122 (CN)
(74) Representative: Zacco GmbH

(57) **Abstract**

The present invention relates to a turntable mechanism, a cleaning device and a sample analyzer. The turntable mechanism includes a turntable. A plurality of circles of placement part groups for placement of reaction vessels are formed on the turntable; all the placement part groups are disposed at intervals from inside to outside along a radial direction of the turntable; at least one circle of through hole group is formed between every two adjacent circles of the placement part groups; and all placement parts in each circle of the placement part group and all through holes in each circle of the through hole group are arranged at intervals along a circumferential direction of the turntable; wherein each circle of the placement part groups and the circles of the through hole groups are all disposed concentrically with the turntable. The turntable mechanism, the cleaning device and the sample analyzer provided by the present invention can reduce the size.

## Description

### Cross Reference to Related Applications

The present disclosure claims benefit of Chinese Patent Application No. 202410157042.X, filed on February 3, 2024, entitled "Turntable Mechanism, Cleaning Device and Sample Analyzer", the contents of which are hereby incorporated by reference in its entirety.

### Technical Field

The present invention relates to the technical field of medical apparatus and instruments, and in particular, to a turntable mechanism, a cleaning device and a sample analyzer.

### Background

Taking an immune analyzer among sample analyzers as an example, the immune analyzer is an analytical instrument with high sensitivity and high specificity that has developed rapidly worldwide in recent years, and can be configured to detect various immune indices of samples such as blood, urine or other body fluids, etc. in a clinical laboratory.

In the immune analyzer, a reaction vessel after incubation is carried on a turntable of a cleaning device, and the reaction vessel is driven by the turntable to rotate and alternately pass through a waste liquid drawing station and a liquid injection station such that a waste liquid drawing mechanism in the cleaning device draws waste liquid out of the reaction vessel at the waste liquid drawing station and a liquid injection mechanism in the cleaning device injects a cleaning liquid into the reaction vessel at the liquid injection station. After a plurality of times of waste liquid drawing and liquid injection, a substance to be measured in the reaction vessel can be separated from impurities and cleaned.

A magnetic adsorption component is further disposed within the cleaning device. The magnetic adsorption component extends along a circumferential direction of the turntable. Within a distance for the reaction vessel to enter the waste liquid drawing station, the magnetic adsorption component cooperates with magnetic beads in the reaction vessel, causing the substance to be measured to be adsorbed on the inner wall of the reaction vessel by means of the magnetic beads, so that waste liquid can be removed by the waste liquid drawing needle mechanism, leaving the substance to be measured in the reaction vessel for subsequent detection.

In order to increase a cleaning speed of the cleaning device, the time for the turntable to stop when rotating intermittently is shortened. However, in order to guarantee a cleaning effect, it needs to ensure that the time for the reaction vessel to pass through the magnetic adsorption component cannot be changed. Thus, a length of the magnetic adsorption component in the circumferential direction of the turntable needs to be increased. Correspondingly, reaction vessels that can be accommodated on the turntable can be increased, leading to an increased size and an increased occupied space of the cleaning device.

### Summary

On this basis, it is necessary to provide, for the above-mentioned problems, a turntable mechanism, a cleaning device and a sample analyzer that can reduce a size.

A turntable mechanism includes a turntable, wherein a plurality of circles of placement part groups for placement of reaction vessels are formed on the turntable; all the placement part groups are disposed at intervals from inside to outside along a radial direction of the turntable; at least one circle of through hole group is formed between every two adjacent circles of the placement part groups; and all placement parts in each circle of the placement part group and all through holes in each circle of the through hole group are arranged at intervals along a circumferential direction of the turntable;
wherein each circle of the placement part group and each circle of the through hole group are both disposed concentrically with the turntable.

In some embodiments, one of every two adjacent circles of the placement part groups is an inner-circle placement part group, and the other one is an outer-circle placement part group; the outer-circle placement part group is disposed around the inner-circle placement part group;
all placement parts of the inner-circle placement part group are disposed in one-to-one correspondence and collinearly with all placement parts of the outer-circle placement part group in the radial direction of the turntable; and
each of the through holes in each circle of the through hole group between the inner-circle placement part group and the outer-circle placement part group, within a length range thereof along the circumferential direction of the turntable, corresponds to at least one of the placement parts of the inner-circle placement part group in the radial direction of the turntable.

In some embodiments, each of the through holes in each circle of the through hole group between the inner-circle placement part group and the outer-circle placement part group, within a length range thereof along the circumferential direction of the turntable, corresponds to at least two of the placement parts of the inner-circle placement part group in the radial direction of the turntable.

In some embodiments, each of the through holes in each circle of the through hole group between the inner-circle placement part group and the outer-circle placement part group is disposed in one-to-one correspondence and collinearly with each of the placement parts of the inner-circle placement part group in the radial direction of the turntable.

In some embodiments, the turntable mechanism further includes a turntable driving assembly which includes a turntable motor, a turntable driving wheel, a turntable driven wheel and a turntable synchronous belt, wherein the turntable motor is in transmission connection with the turntable driving wheel; the turntable synchronous belt is sleeved outside the turntable driving wheel and the turntable driven wheel; and the turntable driven wheel is fixedly connected with the turntable.

A cleaning device includes:
the turntable mechanism as described above;
a waste liquid drawing mechanism including N waste liquid drawing assemblies, wherein each of the waste liquid drawing assemblies includes a waste liquid drawing needle, and N≥2; and
a liquid injection mechanism including (N-1) liquid injection assemblies;
wherein the cleaning device has N waste liquid drawing stations, N cleaning stations and (N-1) liquid injection stations; all the waste liquid drawing stations and all the cleaning stations are in one-to-one correspondence with all the waste liquid drawing assemblies, and all the liquid injection stations are in one-to-one correspondence with all the liquid injection assemblies;
each circle of the placement part group corresponds to at least one of the waste liquid drawing assemblies and at least one of the liquid injection assemblies; different circles of the placement part groups correspond to different waste liquid drawing assemblies and different liquid injection assemblies; each circle of the through hole group corresponds to at least one of the cleaning stations, and different circles of the through hole groups correspond to different cleaning stations; and
the waste liquid drawing stations and the liquid injection stations are disposed alternately along a rotation direction of the turntable.

In some embodiments, the cleaning device further includes N first switching stations and N second switching stations, wherein all the first switching stations and all the second switching stations are located on a top side of the turntable, and all the first switching stations and all the second switching stations are in one-to-one correspondence with all the waste liquid drawing assemblies; the first switching station and the waste liquid drawing station corresponding to the same one of the waste liquid drawing assemblies are aligned with the second switching station and the cleaning station corresponding to the same one of the waste liquid drawing assemblies in an axial direction of the turntable; and the waste liquid drawing assembly is controlled to move and the waste liquid drawing needle thereof is switched between a corresponding first switching station and a corresponding second switching station;
the cleaning device further includes a lifting mechanism, wherein the lifting mechanism is in transmission connection with the waste liquid drawing mechanism and is configured to drive the waste liquid drawing mechanism to go up and down along the axial direction of the turntable;
in a process of the waste liquid drawing mechanism going up, the waste liquid drawing needles in the waste liquid drawing assemblies move from a corresponding waste liquid drawing station to the corresponding first switching station, or move from a corresponding cleaning station to the corresponding second switching station; and
in a process of the waste liquid drawing mechanism going down, the waste liquid drawing needle in the waste liquid drawing assemblies move from the corresponding first switching station to the corresponding waste liquid drawing station, or move from the corresponding second switching station to the corresponding cleaning station.

In some embodiments, the waste liquid drawing mechanism further includes a waste liquid drawing driving assembly; and the waste liquid drawing driving assembly is in transmission connection with all the waste liquid drawing assemblies and is configured to synchronously drive all the waste liquid drawing assemblies to rotate or translate such that the waste liquid drawing needles of the waste liquid drawing assemblies are switched between corresponding first switching stations and second switching stations.

In some embodiments, the placement part groups are arranged in two circles and include an inner-circle placement part group and an outer-circle placement part group;
the cleaning device has an inner-circle switching station and an outer-circle switching station; the inner-circle switching station is disposed in a rotation path of the inner-circle placement part group and located downstream of all the waste liquid drawing stations and all the liquid injection station corresponding to the inner-circle placement part group, and the outer-circle switching stations are disposed in a rotation path of the outer-circle placement part group and located upstream of all the waste liquid drawing stations and all the liquid injection stations corresponding to the outer-circle placement part group; and
when the reaction vessels at the inner-circle placement part group finish all waste liquid drawing operations and all liquid injection operations corresponding to the inner-circle placement part group in the inner-circle placement part group and move to the inner-circle switching station, the reaction vessels are transferred from the inner-circle switching station into the placement parts of the outer-circle placement part group at the outer-circle switching station and continue with the waste liquid drawing and liquid injection operations corresponding to the outer-circle placement part group in the outer-circle placement part group.

In some embodiments, the inner-circle switching stations and the outer-circle switching stations are disposed along a same radial direction of the turntable.

In some embodiments, the cleaning device has a vessel feeding station and an auxiliary vessel discharging station, wherein the vessel feeding station and the auxiliary vessel discharging station are all disposed in the rotation path of the inner-circle placement part group; and the vessel feeding station is located upstream of all the waste liquid drawing stations and all the liquid injection stations corresponding to the inner-circle placement part group, while the auxiliary vessel discharging station is located downstream of all the waste liquid drawing stations and all the liquid injection stations corresponding to the inner-circle placement part group;
the vessel feeding station is configured to receive reaction vessels transferred from a reaction device; and when finishing all waste liquid drawing operations and all liquid injection operations corresponding to the outer-circle placement part group in the outer-circle placement part group and moving to the outer-circle switching station, the reaction vessels are transferred from the outer-circle switching station through the inner-circle switching station to the auxiliary vessel discharging station, and output to the reaction device from the auxiliary vessel discharging station.

In some embodiments, the auxiliary vessel discharging station coincides with the vessel feeding station.

In some embodiments, the cleaning device further has a transitional station, wherein the transitional station is disposed in a rotation path of the inner-circle placement part group and located between the inner-circle switching station and the auxiliary vessel discharging station;
when finishing all waste liquid drawing operations and all liquid injection operations corresponding to the outer-circle placement part group in the outer-circle placement part group and moving to the outer-circle switching station, the reaction vessels are first transferred from the outer-circle switching station to the inner-circle switching station and then moved to the auxiliary vessel discharging station through the transitional station; and
when the reaction vessels are located at the transitional station, the cleaning device is only configured to convey the reaction vessels.

A sample analyzer includes the cleaning device as described above.

In the turntable mechanism, the cleaning device and the sample analyzer described above, a plurality of circles of placement part groups for placement of reaction vessels are formed on a turntable. In practical operation, reaction vessels accommodated by a single circle of the placement part group can be dispersed to the plurality of circles of placement part groups such that the reaction vessels accommodated on each circle of the placement part group are decreased. In this way, even though the turntable speeds up, since the reaction vessels on each circle of the placement part group are decreased, the time for the reaction vessels to pass through a magnetic adsorption component can be guaranteed without increasing a length of the magnetic adsorption component. That is to say, even though the turntable speeds up, it can be guaranteed that a duration for the reaction vessels to pass through the magnetic adsorption component meets a requirement without increasing the length of the magnetic adsorption component and a perimeter of the turntable. In this design, the cleaning device has a small size and occupies a small space.

### Brief Description of the Drawings

FIG. 1 is a schematic structural diagram of a cleaning device provided by an embodiment of the present invention.
FIG. 2 is a schematic structural diagram of the cleaning device of FIG. 1 in one perspective.
FIG. 3 is a schematic structural diagram of a waste liquid drawing mechanism cooperating with a lifting mechanism and a turntable mechanism in the cleaning device of FIG. 1.
FIG. 4 is a top view of the cleaning device of FIG. 1 after the removal of the waste liquid drawing mechanism and the lifting mechanism.
FIG. 5 is a top view of the cleaning device of FIG. 4 after the removal of a turntable.
FIG. 6 is a sectional view of the cleaning device of FIG. 1 after the cooperation of a needle seat, a waste liquid drawing bearing, a waste liquid drawing bearing pedestal, a first waste liquid drawing needle, a second waste liquid drawing needle, a waste liquid drawing seat and a waste liquid drawing driven wheel.

### List of Reference Numerals:

1: cleaning device; 2: reaction vessel;
10: turntable mechanism; 20: waste liquid drawing mechanism; 30: liquid injection mechanism; 40: lifting mechanism; 50: magnetic adsorption mechanism; 60: cleaning mechanism;
11: turntable; 111: inner-circle placement part group; 111a: placement part; 112: outer-circle placement part group; 113: through hole group; 113a: through hole; 114: turntable motor; 115: turntable driving wheel; 116: turntable driven wheel; 117: turntable synchronous belt; 118: mounting base; 118a: central hole;
21: waste liquid drawing assembly; 21a: first waste liquid drawing assembly; 21b: second waste liquid drawing assembly; 21c: third waste liquid drawing assembly; 21d: fourth waste liquid drawing assembly; 211: needle seat; 211a: seat body; 211b: shaft; 212: first waste liquid drawing needle; 213: second waste liquid drawing needle; 22: waste liquid drawing driving assembly; 221: waste liquid drawing seat; 222: waste liquid drawing motor; 223: waste liquid drawing driving wheel; 224: waste liquid drawing synchronous belt; 225: waste liquid drawing driven wheel; 226: tensioning wheel; 227: waste liquid drawing bearing; 228: waste liquid drawing bearing pedestal;
31: liquid injection assembly; 31a: first liquid injection assembly; 31b: second liquid injection assembly; 31c: third liquid injection assembly;
41: lifting motor; 42: lifting driving wheel; 43: lifting rack; 44: lifting rod;
51: first magnetic adsorption component; 52: second magnetic adsorption component; 53: third magnetic adsorption component; 54: fourth magnetic adsorption component;
61: cleaning assembly;
71: first waste liquid drawing station; 72: second waste liquid drawing station; 73: third waste liquid drawing station; 74: fourth waste liquid drawing station; 75: first liquid injection station; 76: second liquid injection station; 77: third liquid injection station; 78: first uniform mixing station; 79: second uniform mixing station; 81: third uniform mixing station; 82: vessel feeding station; 83: outer-circle switching station; 84: inner-circle switching station; 85: auxiliary vessel discharging station; and 86: transitional station.

### Detailed Description of the Embodiments

To make the above objectives, features and advantages of the present invention more comprehensible, the specific implementations of the present invention are described in detail below with reference to the drawings. Many details are provided in the following description in order for a thorough understanding of the present invention. However, the present invention may be implemented in many other ways other than those described herein, and those skilled in the art can make similar improvements without departing from the connotation of the present invention. Therefore, the present invention is not limited to the specific embodiments disclosed below.

It should be noted that, in the description of the present invention, the terms such as "central", "longitudinal", "transverse", "long", "wide", "thick", "upper", "lower", "front", "back", "left", "right", "vertical", "horizontal", "top", "bottom", "inner", "outer", "clockwise", "anticlockwise", "axial", "radial" and "circumferential" are used to indicate orientations shown in the drawings. It should be noted that these terms are merely intended to facilitate a simple description of the present invention, rather than to indicate or imply that the mentioned apparatus or elements must have the specific orientation or be constructed and operated in the specific orientation. Therefore, these terms may not be construed as a limitation to the present invention.

Moreover, the terms such as "first" and "second" are used only for the purpose of description and should not be construed as indicating or implying a relative importance, or implicitly indicating a quantity of indicated technical features. Therefore, a feature limited by "first" or "second" may explicitly or implicitly include at least one such feature. In the description of the present invention, "a plurality of" means at least two, such as two or three, unless otherwise clearly and specifically limited.

In the present invention, unless otherwise clearly specified and defined, the terms such as "mounting", "interconnection", "connection" and "fixation" are intended to be understood in a broad sense. For example, the "connection" may be a fixed connection, removable connection or integral connection; may be a mechanical connection or electrical connection; may be a direct connection or indirect connection using a medium; and may be a communication or interaction between two elements. Those of ordinary skill in the art may understand the specific meanings of the above terms in the present invention based on the specific situation.

In the present invention, unless otherwise explicitly specified, when it is described that a first feature is "above" or "below" a second feature, it indicates that the first and second features are in direct contact or the first and second features are in indirect contact through an intermediate feature. In addition, when it is described that the first feature is "over", "above" and "on" the second feature, it indicates that the first feature is directly or obliquely above the second feature, or simply indicates that an altitude of the first feature is higher than that of the second feature. When it is described that a first feature is "under", "below" or "beneath" a second feature, it indicates that the first feature is directly or obliquely under the second feature or simply indicates that the first feature is lower than the second feature.

It should be noted that when an element is "fixed" or "provided" on another element, the element may be fixed on another element directly or via an intermediate element. When an element is connected to another element, the element may be connected to the another element directly or via an intermediate element. The terms "vertical", "horizontal", "upper", "lower", "left", "right" and other similar expressions used herein are for illustrative purposes only, rather than to mean the only implementation.

The present invention provides a sample analyzer which is configured to detect a sample and provide a basis of determination for clinical treatment. The sample analyzer may be an immune analyzer, a blood coagulation analyzer, a blood cell analyzer, a urine analyzer, etc., and the specific type is not defined here. For the convenience of description, the following embodiments are all described by taking as an example that the sample analyzer is the immune analyzer.

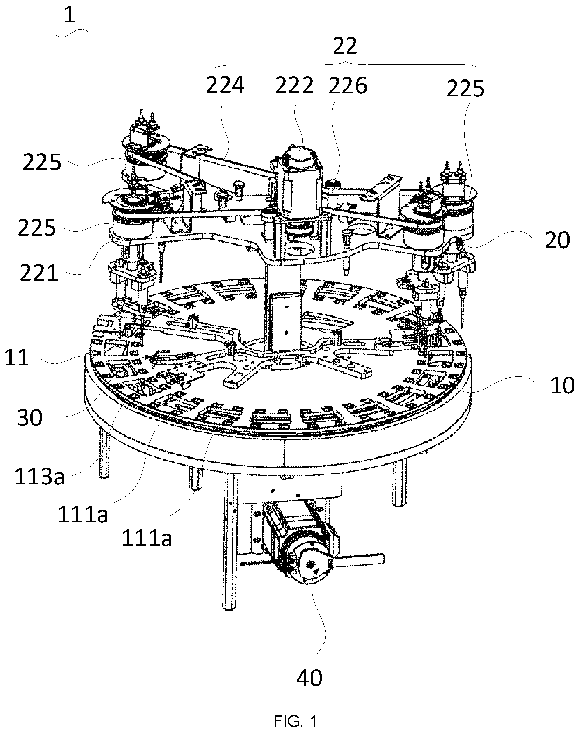

Referring to FIG. 1, the sample analyzer includes a storage device, a transfer device, an injection device, a uniform mixing device, a reaction device, a cleaning device 1 and a measurement device. The storage device is configured to store a sample and a reagent required for sample detection. The transfer device is configured to drive a reaction vessel 2 to transfer between the injection device, the reaction device, the cleaning device 1 and the measurement device. The injection device is configured to inject the sample and the reagent into the reaction vessel 2. The uniform mixing device is configured to uniformly mix the sample and the reagent. The reaction device is configured to carry and convey the reaction vessel 2 and is capable of performing an incubation operation on the uniformly mixed sample and reagent so that the sample can fully bind to and react with the reagent, ensuring the accuracy of sample detection. The cleaning device 1 is configured to clean and remove impurities in the reaction vessel 2 after incubation, leaving a substance to be measured in the reaction vessel 2. The measurement device is configured to detect the substance to be measured to obtain detection parameters of the sample and meet a detection requirement.

For the convenience of understanding, names of the sample and the reagent at various stages are described in detail here: the mixture of the sample and the reagent in the reaction vessel 2 is called a reaction solution. The reaction device is capable of performing the incubation operation on the reaction solution in the reaction vessel 2 such that the sample fully reacts with the reagent. After reaction, substances in the reaction vessel 2 are the substance to be measured and the impurities. That is to say, the reaction solution after reaction is present in the form of the substance to be measured and the impurities. The impurities may be by-products produced by secondary reactions, or may be other substances that affect the detection of the measurement device, etc.

It needs to be noted that in practical operation of the sample analyzer, the substance to be measured after reaction is present in the reaction vessel 2 by adhering to magnetic beads.

The storage device, the transfer device, the injection device, the uniform mixing device and the measurement device are conventional settings in the art and thus will not be described redundantly here.

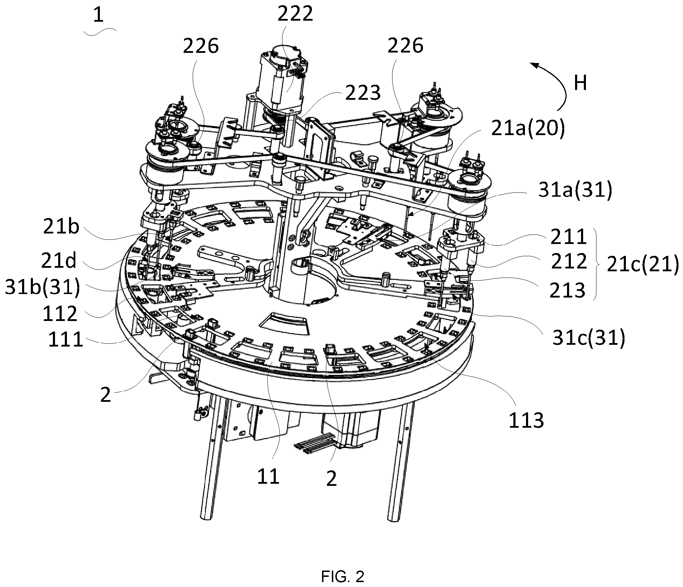

Referring to FIG. 1 again and also referring to FIGs. 2, 3 and 4, the cleaning device 1 includes a turntable mechanism 10, a waste liquid drawing mechanism 20, a liquid injection mechanism 30, a uniform mixing mechanism, a lifting mechanism 40, a cleaning mechanism 60 and a magnetic adsorption mechanism 50. The turntable mechanism 10 is configured to carry and convey the reaction vessel 2. The liquid injection mechanism 30 is configured to inject a cleaning liquid into the reaction vessel 2. The uniform mixing mechanism is configured to uniformly mix the cleaning liquid with magnetic beads. The waste liquid drawing mechanism 20 is configured to draw waste liquid out of the reaction vessel 2. The waste liquid may be impurities, or may be a mixed solution of impurities and the cleaning liquid. The lifting mechanism 40 is configured to drive the waste liquid drawing mechanism 20 to go up and down. The cleaning mechanism 60 is configured to clean a waste liquid drawing needle of the waste liquid drawing mechanism 20. The magnetic adsorption mechanism 50 is configured to adhere the magnetic beads to a wall surface of the reaction vessel 2 so that a substance to be measured can be adsorbed on the wall surface of the reaction vessel 2 along with the magnetic beads in a waste liquid drawing process, preventing the substance to be measured from being removed by the waste liquid drawing mechanism 20.

The turntable mechanism 10 includes a turntable 11 and a turntable driving assembly. A plurality of circles of placement part groups for placement of reaction vessels 2 are formed on the turntable 11; all the placement part groups are disposed at intervals from inside to outside along a radial direction of the turntable 11; at least one circle of through hole group 113 is formed between every two adjacent circles of the placement part groups; and all placement parts 111a in each circle of the placement part group and all through holes 113a in each circle of the through hole group 113 are arranged at intervals along a circumferential direction of the turntable 11; wherein the circles of the placement part groups and the circles of the through hole groups 113 are all disposed concentrically with the turntable 11. The turntable driving assembly is in transmission connection with the turntable 11 and is configured to drive the turntable 11 to rotate about a central axis thereof (a rotation direction is a direction indicated by arrow H in FIG. 2).

The placement part 111a is configured to carry and convey the reaction vessel 2, and the through hole 113a is configured for the waste liquid drawing needle of the waste liquid drawing mechanism 20 to pass through. The placement part 111a is of a through hole structure.

The placement part groups may be disposed in two circles, three circles or even more circles. Taking FIG. 2 as an example, the placement part groups are disposed in two circles. The more circles in which the placement part groups are disposed, the more reaction vessels 2 that the turntable 11 can carry, but the less influence on a radial size of the turntable 11. Accordingly, the turntable 11 can carry more reaction vessels 2 while maintaining a small radial size. This is conducive to reducing the space occupied by the sample analyzer, and a test throughput of the sample analyzer can be increased.

One of every two adjacent circles of the placement part groups is defined as an inner-circle placement part group 111, and the other one is defined as an outer-circle placement part group 112; the outer-circle placement part group 112 is disposed around the inner-circle placement part group 111; and all the placement parts 111a of the inner-circle placement part group 111 are disposed in one-to-one correspondence and collinearly with all the placement parts 111a of the outer-circle placement part group 112 in the radial direction of the turntable 11. There is a short distance between two placement parts 111a in every two adjacent circles of the placement part groups disposed collinearly such that the reaction vessel 2 is rapidly transferred along the radial direction of the turntable 11 and between the two placement parts 111a in every two adjacent circles of the placement part groups disposed collinearly, thereby improving the transfer efficiency.

One circle, two circles or even more circles of through hole groups 113 may be disposed between every two adjacent circles of the placement part groups. Taking FIG. 2 as an example, one circle of through hole group 113 is disposed between two adjacent circles of the placement part groups.

For the convenience of description, the following embodiments are all described by taking as an example that the placement part groups are arranged in two circles and include the inner-circle placement part group 111 and the outer-circle placement part group 112 in FIG. 2 and one circle of through hole group 113 is disposed between the inner-circle placement part group 111 and the outer-circle placement part group 112.

In every two adjacent circles of the placement part groups, each through hole 113a in each circle of the through hole group 113 between the inner-circle placement part group 111 and the outer-circle placement part group 112, within a length range thereof along the circumferential direction of the turntable 11, corresponds to at least one placement part 111a of the inner-circle placement part group 111 in the radial direction of the turntable 11.

As an example, in some embodiments, in every two adjacent circles of the placement part groups, each through hole 113a in each circle of the through hole group 113 between the inner-circle placement part group 111 and the outer-circle placement part group 112, within a length range thereof along the circumferential direction of the turntable 11, corresponds to at least two placement parts 111a of the inner-circle placement part group 111 in the radial direction of the turntable 11. This design can increase the length of the through hole 113a, be convenient for reducing the weight of the turntable 11, and be conducive to the turntable driving assembly driving the turntable 11 to speed up.

As an example, in some embodiments, in every two adjacent circles of the placement part groups, each through hole 113a in each circle of the through hole group 113 between the inner-circle placement part group 111 and the outer-circle placement part group 112 is disposed in one-to-one correspondence and collinearly with each placement part 111a of the inner-circle placement part group 111 in the radial direction of the turntable 11. In this way, the hollowed-out area of the turntable 11 can be reduced, which is convenient for maintaining good mechanical strength of the turntable 11, so that the turntable 11 can carry more reaction vessels 2 stably and reliably.

The turntable driving assembly includes a mounting base 118, a turntable motor 114, a turntable driving wheel 115, a turntable driven wheel 116 and a turntable synchronous belt 117. A central hole 118a is formed in the mounting base 118. The turntable motor 114, the turntable driving wheel 115 and the turntable synchronous belt 117 are all located on a bottom side of the mounting base 118, and the turntable motor 114 is mounted on the mounting base 118 and is in transmission connection with the turntable driving wheel 115. The turntable 11 is located on a top side of the mounting base 118. The turntable synchronous belt 117 is sleeved outside the turntable driving wheel 115 and the turntable driven wheel 116, and the turntable driven wheel 116 penetrates through the central hole 118a of the mounting base 118 and is fixedly connected with the turntable 11.

In practical operation, the power from the turntable motor 114 is transferred to the turntable 11 through the turntable driving wheel 115, the turntable synchronous belt 117 and the turntable driven wheel 116, and puts the turntable 11 into rotation. The turntable driving assembly of this structure is simple in structure and stable in power transfer, which is conducive to improving the stability of rotation of the turntable 11.

Of course, the structure of the turntable driving assembly is not limited to the one described above, and may also be other structures. For example, in some embodiments, the turntable driving assembly may further include a turntable bearing pedestal and a turntable bearing. Both of the turntable bearing pedestal and the turntable bearing are located on the bottom side of the mounting base 118, and the turntable bearing is sleeved outside the turntable driven wheel 116, while the turntable bearing pedestal is sleeved outside the turntable bearing and fixedly connected with the mounting base 118. The turntable bearing pedestal and the turntable bearing are helpful for improving the stability of rotation of the turntable driven wheel 116, thus guaranteeing the reliability of rotation of the turntable 11. For another example, in some other embodiments, the turntable driving assembly may include only the turntable motor 114. The turntable motor 114 directly drives the turntable 11 to rotate.

The cleaning device 1 has N waste liquid drawing stations, N cleaning stations, N first switching stations, N second switching stations, (N-1) liquid injection stations and (N-1) uniform mixing stations, wherein N≥2, and N is a natural number. In particular, N may be 2, 3, 4, etc. Taking FIG. 2 as an example, N is 4. For the convenience of description, the following embodiments are all described by taking as an example that N is 4. In this embodiment, the number of the waste liquid drawing stations, the number of the cleaning stations, the number of the first switching stations and the number of the second switching stations are all 4, and the number of the liquid injection stations and the number of the uniform mixing stations are both 3.

All the first switching stations and all the second switching stations are located on a top side of the turntable 11.

The waste liquid drawing mechanism 20 includes a waste liquid drawing driving assembly 22 and N waste liquid drawing assemblies 21. The waste liquid drawing assembly 21 includes a waste liquid drawing needle. The liquid injection mechanism 30 includes (N-1) liquid injection assemblies 31. The uniform mixing mechanism includes (N-1) uniform mixing assemblies. The cleaning mechanism 60 includes N cleaning assemblies 61. All the waste liquid drawing stations, all the cleaning stations, all the first switching stations and all the second switching stations are in one-to-one correspondence with all the waste liquid drawing assemblies 21, and the first switching station and the waste liquid drawing station corresponding to the same waste liquid drawing assembly 21 are aligned with the second switching station and the cleaning station corresponding to the same waste liquid drawing assembly 21 in an axial direction of the turntable 11. All the liquid injection stations are in one-to-one correspondence with all the liquid injection assemblies 31; all the uniform mixing stations are in one-to-one correspondence with all the uniform mixing assemblies; and all the cleaning stations are in one-to-one correspondence with all the cleaning assemblies 61.

As an example, the cleaning assembly 61 may be a cleaning nozzle, a sprayer or other structures. For the convenience of description, the following embodiments are all described by taking as an example that the cleaning assembly 61 is the cleaning nozzle.

The waste liquid drawing needle of each waste liquid drawing assembly 21 draws waste liquid out of the reaction vessel 2 at the corresponding waste liquid drawing station and moves to the corresponding cleaning station for cleaning, and the position of the waste liquid drawing needle of the waste liquid drawing assembly 21 can also be switched between the corresponding first and second switching stations. The liquid injection assemblies 31 are configured to inject the cleaning liquid into the reaction vessels 2 at their respective liquid injection stations, and the uniform mixing assemblies are configured to uniformly mix the magnetic beads and the cleaning liquid in the reaction vessels 2 at their respective uniform mixing stations. The cleaning assemblies 61 are configured to clean the waste liquid drawing needles moving to their respective cleaning stations.

Each circle of the placement part group corresponds to at least one waste liquid drawing assembly 21 and at least one liquid injection assembly 31; different circles of the placement part groups correspond to different waste liquid drawing assemblies 21 and different liquid injection assemblies 31; each circle of the through hole group 113 corresponds to at least one cleaning station, and different circles of the through hole groups 113 correspond to different cleaning stations; and the waste liquid drawing stations, the liquid injection stations and the uniform mixing stations are disposed alternately along a rotation direction of the turntable 11.

In practical operation, the turntable 11 rotates under the action of the turntable driving assembly so that each circle of the placement part group can drive the reaction vessels 2 to alternately pass through the waste liquid drawing stations, the liquid injection stations and the uniform mixing stations corresponding to this placement part group and the through hole group 113 can pass through positions aligned with their respective cleaning stations.

For the convenience of description, the following embodiments are all described by taking as an example that: the placement part groups are arranged in two circles and include the inner-circle placement part group 111 and the outer-circle placement part group 112 in FIG. 2; one circle of through hole group 113 is disposed between the inner-circle placement part group 111 and the outer-circle placement part group 112; the number of the waste liquid drawing stations, the number of the cleaning stations, the number of the first switching stations and the number of the second switching stations are all 4; the number of the liquid injection stations and the number of the uniform mixing stations are both 3; the waste liquid drawing assemblies 21 and the cleaning assemblies 61 are both arranged in four groups; the liquid injection assemblies 31 and the uniform mixing assemblies are both arranged in three groups; and after finishing the waste liquid drawing, liquid injection and uniform mixing operations in the inner-circle placement part group 111, the reaction vessels 2 are transferred to the outer-circle placement part group 112 for the waste liquid drawing, liquid injection and uniform mixing operations.

A first waste liquid drawing assembly 21 corresponding to the inner-circle placement part group 111 is defined as a first waste liquid drawing assembly 21a, and a second waste liquid drawing assembly 21 corresponding to the inner-circle placement part group 111 as a second waste liquid drawing assembly 21b, a first liquid injection assembly 31 corresponding to the inner-circle placement part group 111 as a first liquid injection assembly 31a, a second liquid injection assembly 31 corresponding to the inner-circle placement part group 111 as a second liquid injection assembly 31b, a first uniform mixing assembly corresponding to the inner-circle placement part group 111 as a first uniform mixing assembly, a second uniform mixing assembly corresponding to the inner-circle placement part group 111 as a second uniform mixing assembly, a first waste liquid drawing assembly 21 corresponding to the outer-circle placement part group 112 as a third waste liquid drawing assembly 21c, a second waste liquid drawing assembly 21 corresponding to the outer-circle placement part group 112 as a fourth waste liquid drawing assembly 21d, a first liquid injection assembly 31 corresponding to the outer-circle placement part group 112 as a third liquid injection assembly 31c, and a first uniform mixing assembly corresponding to the outer-circle placement part group 112 as a third uniform mixing assembly.

A waste liquid drawing station corresponding to the first waste liquid drawing assembly 21 is defined as a first waste liquid drawing station 71; a first switching station corresponding to the first waste liquid drawing station 71 is located above the first waste liquid drawing station 71, and a cleaning station corresponding to the first waste liquid drawing assembly 21 is defined as a first cleaning station. A waste liquid drawing station corresponding to the second waste liquid drawing assembly 21 is defined as a second waste liquid drawing station 72; a first switching station corresponding to the second waste liquid drawing station 72 is located above the second waste liquid drawing station 72, and a cleaning station corresponding to the second waste liquid drawing assembly 21 is defined as a second cleaning station. A waste liquid drawing station corresponding to the third waste liquid drawing assembly is defined as a third waste liquid drawing station 73; a first switching station corresponding to the third waste liquid drawing station 73 is located above the third waste liquid drawing station 73, and a cleaning station corresponding to the third waste liquid drawing assembly 21 is defined as a third cleaning station. A waste liquid drawing station corresponding to the fourth waste liquid drawing assembly 21 is defined as a fourth waste liquid drawing station 74; a first switching station corresponding to the fourth waste liquid drawing station 74 is located above the fourth waste liquid drawing station 74, and a cleaning station corresponding to the fourth waste liquid drawing assembly 21 is defined as a fourth cleaning station.

A liquid injection station corresponding to the first liquid injection assembly 31a is defined as a first liquid injection station 75, and a liquid injection station corresponding to the second liquid injection assembly 31b as a second liquid injection station 76, and a liquid injection station corresponding to the third liquid injection assembly 31c as a third liquid injection station 77. A uniform mixing station corresponding to the first uniform mixing assembly is defined as a first uniform mixing station 78, and a uniform mixing station corresponding to the second uniform mixing assembly as a second uniform mixing station 79, and a uniform mixing station corresponding to the third uniform mixing assembly as a third uniform mixing station 81.

Taking FIG. 2 as an example, the turntable 11 rotates so that all the placement parts 111a in the inner-circle placement part group 111 can drive the reaction vessels 2 to sequentially pass through the first waste liquid drawing station 71, the first liquid injection station 75, the first uniform mixing station 78, the second waste liquid drawing station 72, the second liquid injection station 76 and the second uniform mixing station 79, and the placement parts 111a in the outer-circle placement part group 112 can drive the reaction vessels 2 to sequentially pass through the third waste liquid drawing station 73, the third liquid injection station 77, the third uniform mixing station 81 and the fourth waste liquid drawing station 74. All the through holes 113a in the through hole group 113 can sequentially go past positions aligned with the second switching station and the first cleaning station corresponding to a first waste liquid drawing group, positions aligned with the second switching station and the second cleaning station corresponding to a second waste liquid drawing group, positions aligned with the second switching station and the third cleaning station corresponding to a third waste liquid drawing group, and positions aligned with the second switching station and the fourth cleaning station corresponding to a fourth waste liquid drawing group.

The first waste liquid drawing assembly 21a, the first liquid injection assembly 31a, the first uniform mixing assembly, the second waste liquid drawing assembly 21b, the second liquid injection assembly 31b and the second uniform mixing assembly are sequentially disposed along the rotation direction of the turntable 11, and all aligned with the inner-circle placement part group 111. The third waste liquid drawing assembly 21c, the third liquid injection assembly 31c, the third uniform mixing assembly and the fourth waste liquid drawing assembly 21d are sequentially disposed along the rotation direction of the turntable 11, and all aligned with the outer-circle placement part group 112.

In practical operation, the reaction vessels 2 placed on the inner-circle placement part group 111 pass through the first waste liquid drawing station 71, the first liquid injection station 75, the first uniform mixing station 78, the second waste liquid drawing station 72, the second liquid injection station 76 and the second uniform mixing station 79, and in the same time period, the first waste liquid drawing station 71, the first liquid injection station 75, the first uniform mixing station 78, the second waste liquid drawing station 72, the second liquid injection station 76 and the second uniform mixing station 79 all have the reaction vessels 2. The first waste liquid drawing assembly 21a is configured to draw waste liquid out of the reaction vessel 2 at the first waste liquid drawing station 71; the first liquid injection assembly 31a is configured to inject the cleaning liquid into the reaction vessel 2 at the first liquid injection station 75; and the first uniform mixing assembly is configured to uniformly mix the cleaning liquid and the magnetic beads at the first uniform mixing station 78. The second waste liquid drawing assembly 21b is configured to draw waste liquid out of the reaction vessel 2 at the second waste liquid drawing station 72; the second liquid injection assembly 31b is configured to inject the cleaning liquid into the reaction vessel 2 at the second liquid injection station 76; and the second uniform mixing assembly is configured to uniformly mix the cleaning liquid and the magnetic beads at the second uniform mixing station 79. After finishing waste liquid drawing twice, liquid injection twice and uniform mixing twice on the inner-circle placement part group 111, the reaction vessels 2 move to the outer-circle placement part group 112 and sequentially pass through the third waste liquid drawing station 73, the third liquid injection station 77, the third uniform mixing station 81 and the fourth waste liquid drawing station 74. In the same time period, the third waste liquid drawing station 73, the third liquid injection station 77, the third uniform mixing station 81 and the fourth waste liquid drawing station all have the reaction vessels 2. The third waste liquid drawing assembly 21c is configured to draw waste liquid out of the reaction vessel 2 at the third waste liquid drawing station 73; the third liquid injection assembly 31c is configured to inject the cleaning liquid into the reaction vessel 2 at the third liquid injection station 77; the third uniform mixing assembly is configured to uniformly mix the cleaning liquid and the magnetic beads in the reaction vessel 2 at the third uniform mixing station 81; and the fourth waste liquid drawing assembly 21d is configured to draw waste liquid out of the reaction vessel 2 at the fourth waste liquid drawing station 74. After the reaction vessels 2 finish waste liquid drawing twice, cleaning liquid injection once and uniform mixing once on the outer-circle placement part group 112, the reaction vessels 2 complete a complete process of waste liquid drawing, liquid injection and uniform mixing. The vessels can be taken out from the outer-circle placement part group 112 and reach the measurement device for detection, or can be transferred to the reaction device again and then transferred to the inner-circle placement part group 111 after repetitive addition of the reagent and reaction, and taken out after the waste liquid drawing, liquid injection and uniform mixing operations corresponding to the inner-circle placement part group 111 and the outer-circle placement part group 112 are finished.

In this embodiment, N waste liquid drawing assemblies 21, (N-1) liquid injection assemblies 31, (N-1) uniform mixing assemblies, N waste liquid drawing stations, N cleaning stations, N first switching stations, N second switching stations, (N-1) liquid injection stations, (N-1) uniform mixing stations and a plurality of circles of placement part groups are provided to synchronously draw waste liquids out of N reaction vessels 2, inject the cleaning liquid into (N-1) reaction vessels 2 and perform uniform mixing on the (N-1) reaction vessels 2. This is conducive to improving the efficiency of the sample analyzer.

The waste liquid drawing assembly 21 moves under the action of the waste liquid drawing driving assembly 22 and the waste liquid drawing needle thereof is switched between the corresponding first and second switching stations.

The lifting mechanism 40 is in transmission connection with the waste liquid drawing mechanism 20. The lifting mechanism 40 is configured to drive the waste liquid drawing mechanism 20 to go up and down along the axial direction of the turntable 11. In a process of the lifting mechanism 40 driving the waste liquid drawing mechanism 20 to go up, the waste liquid drawing needles in the waste liquid drawing assemblies 21 move from the corresponding waste liquid drawing stations to the corresponding first switching stations, or move from the corresponding cleaning stations to the corresponding second switching stations through the aligned through holes 113a. In a process of the waste liquid drawing mechanism 20 going down, the waste liquid drawing needles in the waste liquid drawing assemblies 21 move from the corresponding first switching stations to the corresponding waste liquid drawing stations, or move from the corresponding second switching stations to the corresponding cleaning stations through the aligned through holes 113a.

The waste liquid drawing assemblies 21 may be as many as and in one-to-one correspondence with the waste liquid drawing driving assemblies 22, and different waste liquid drawing driving assemblies 22 are configured to drive different waste liquid drawing assemblies 21 to move. Preferably, the waste liquid drawing driving assemblies 22 are in transmission connection with all the waste liquid drawing assemblies 21 and are configured to synchronously drive all the waste liquid drawing assemblies 21 to rotate or translate such that the waste liquid drawing needles of the waste liquid drawing assemblies 21 are switched between the corresponding first and second switching stations. The design of N waste liquid drawing assemblies 21 sharing the same waste liquid drawing driving assembly 22 can reduce the number of the waste liquid drawing driving assemblies 22, simplify the structure of the cleaning device 1, and reduce the weight of the cleaning device 1.

In particular, the waste liquid drawing driving assembly 22 is configured to synchronously drive all the waste liquid drawing assemblies 21 to rotate or translate such that the waste liquid drawing needles of the waste liquid drawing assemblies 21 are switched between the corresponding first and second switching stations. For example, the waste liquid drawing assembly 22 drives the waste liquid drawing assembly 21 to translate along the radial direction of the turntable 11 such that the waste liquid drawing needle is switched between the first switching station and the second switching station. For another example, the waste liquid drawing assembly 21 includes a needle seat 211 and a waste liquid drawing needle disposed on the needle seat 211. The waste liquid drawing assembly 22 can drive the waste liquid drawing needles in all the waste liquid drawing assemblies 21 to rotate by driving the needle seats 211 of all the waste liquid drawing assemblies 21 such that the waste liquid drawing needles in all the waste liquid drawing assemblies 21 are switched between the first and second switching stations.

For the convenience of description, the following embodiments are all described by taking as an example that the waste liquid drawing driving assembly 22 is configured to synchronously drive all the waste liquid drawing assemblies 21 to rotate such that the waste liquid drawing needles of the waste liquid drawing assemblies 21 are switched between the corresponding first and second switching stations.

Referring to FIGs. 1 and 2 again, in this embodiment, as an example, the waste liquid drawing driving assembly 22 includes a waste liquid drawing seat 221, a waste liquid drawing motor 222, a waste liquid drawing driving wheel 223, a waste liquid drawing synchronous belt 224 and N waste liquid drawing driven wheels 225. The waste liquid drawing motor 222 and all the waste liquid drawing driven wheels 225 are disposed on the waste liquid drawing seat 221, and the waste liquid drawing driven wheels 225 are rotatable relative to the waste liquid drawing seat 221. The waste liquid drawing motor 222 is in transmission connection with the waste liquid drawing driving wheel 223. The waste liquid drawing synchronous belt 224 is sleeved outside the waste liquid drawing driving wheel 223 and all the waste liquid drawing driven wheels 225. All the waste liquid drawing driven wheels 225 are in one-to-one correspondence with the needle seats 211 of all the waste liquid drawing assemblies 21. The waste liquid drawing driven wheels 225 are fixedly connected with their respective needle seats 211.

When the waste liquid drawing driving assembly 22 works, the power of the waste liquid drawing motor 222 is transferred to the needle seats 211 of the waste liquid drawing assemblies 21 through the waste liquid drawing driving wheel 223, the waste liquid drawing synchronous belt 224 and the waste liquid drawing driven wheels 225 so that the needle seats 211 can drive the waste liquid drawing needles mounted thereon to rotate and be switched between the first and second switching stations.

The waste liquid drawing driving assembly 22 of this structure is stable in power transfer and high in working accuracy.

In some embodiments, the waste liquid drawing driving assembly 22 further includes at least N tensioning wheels 226. All the tensioning wheels 226 are disposed on the waste liquid drawing seat 221 and located outside the waste liquid drawing synchronous belt 224, and all the tensioning wheels 226 are abutted against an outer side face of the waste liquid drawing synchronous belt 224. In a surrounding direction of the waste liquid drawing synchronous belt 224, each segment of the waste liquid drawing synchronous belt 224 between every two adjacent waste liquid drawing driven wheels 225 and each segment of the waste liquid drawing synchronous belt 224 between the waste liquid drawing driving wheel 223 and the waste liquid drawing driven wheel 225 disposed adjacently are both abutted against at least one tensioning wheel 226.

The tensioning wheels 226 can tension the segments of the waste liquid drawing synchronous belt 224 so that the waste liquid drawing synchronous belt 224 can stably and reliably drive the waste liquid drawing driven wheels 225 to run.

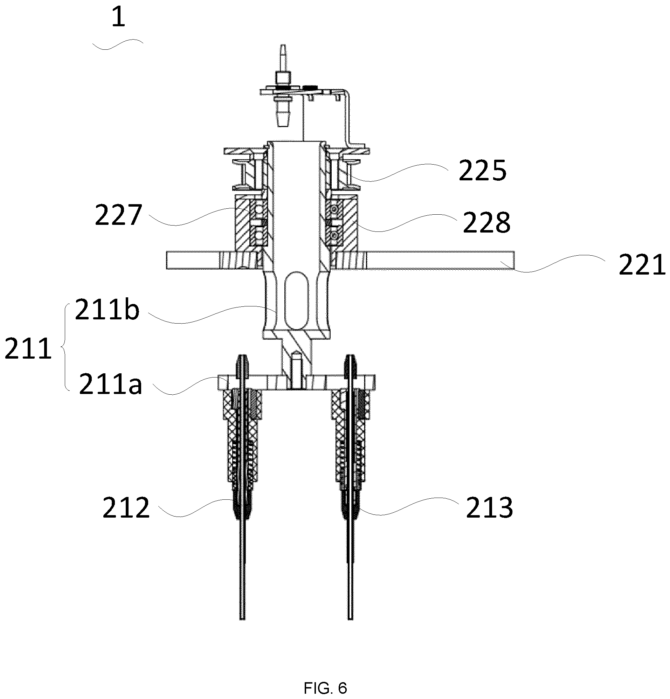

Referring to FIG. 6, further, the waste liquid drawing driving assembly 22 also includes a waste liquid drawing bearing 227 and a waste liquid drawing bearing pedestal 228. The needle seat 211 includes a seat body 211a and a shaft 211b. The waste liquid drawing needle is mounted on the seat body 211a. The shaft 211b is fixedly connected between the seat body 211a and the waste liquid drawing driven wheel 225. The waste liquid drawing bearing 227 is rotatably sleeved outside the shaft 211b. The waste liquid drawing bearing pedestal 228 is mounted on the waste liquid drawing seat 221 and sleeved outside the waste liquid drawing bearing 227.

With the waste liquid drawing bearing 227 and the waste liquid drawing bearing pedestal 228, it is conducive to improving the stability of rotation of the shaft 211b; thus, the stability of rotation of the waste liquid drawing needle is also improved. Therefore, the waste liquid drawing needle can be accurately switched between stations.

In the same waste liquid drawing assembly 21, one or two waste liquid drawing needles may be included. Preferably, there are two waste liquid drawing needles. The two waste liquid drawing needles are defined as a first waste liquid drawing needle 212 and a second waste liquid drawing needle 213, respectively. Both of the first waste liquid drawing needle 212 and the second waste liquid drawing needle 213 are mounted on the seat body 211a.

Under the action of the waste liquid drawing driving assembly 22, the needle seat 211 drives the first waste liquid drawing needle 212 and the second waste liquid drawing needle 213 to synchronously revolve such that the first waste liquid drawing needle 212 and the second waste liquid drawing needle 213 are alternately switched between the first and second switching stations.

The first waste liquid drawing needle 212 and the second waste liquid drawing needle 213 are disposed in the waste liquid drawing assembly 21, when the first waste liquid drawing needle 212 draws waste liquid, the second waste liquid drawing needle 213 can be cleaned. Subsequently, when next reaction vessel 2 moves to the waste liquid drawing station, the first waste liquid drawing needle 212 and the second waste liquid drawing needle 213 are reversed so that the second waste liquid drawing needle 213 can be used for drawing waste liquid out of the reaction vessel 2 at the waste liquid drawing station and the first waste liquid drawing needle 212 can move to the cleaning station for cleaning. That is to say, the first waste liquid drawing needle 212 and the second waste liquid drawing needle 213 are used alternately so that the waste liquid drawing operation and the cleaning operation can be performed simultaneously. The cleaned waste liquid drawing needle can also be used for next waste liquid drawing. Thus, the time for waiting for cleaning the waste liquid drawing needle can be greatly reduced, which is conducive to increasing the detection speed of the sample analyzer.

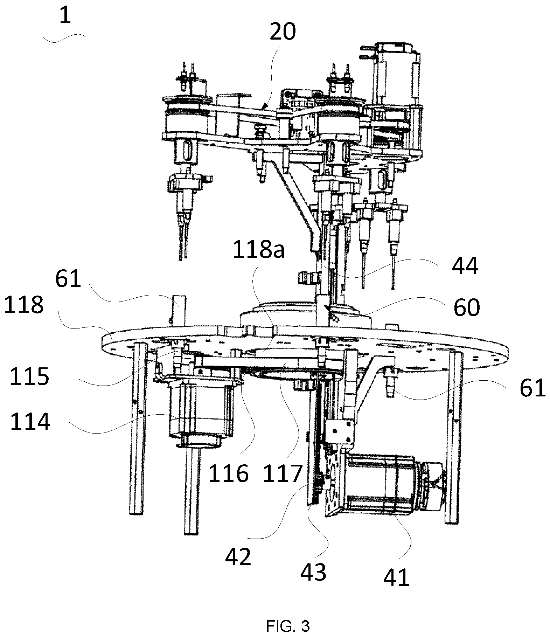

Referring to FIG. 3 again, the lifting mechanism 40 includes a lifting motor 41, a lifting driving wheel 42, a lifting rack 43 and a lifting rod 44. The lifting motor 41 is in transmission connection with the lifting driving wheel 42, and the lifting driving wheel 42 is engaged with the lifting rack 43. The lifting rod 44 is fixedly connected with the lifting rack 43. The lifting rod 44 passes through the central hole 118a of the mounting base 118 and is connected with the waste liquid drawing mechanism 20. The lifting motor 41 drives the lifting driving wheel 42 to cause the lifting rack 43, the lifting rod 44 and the waste liquid drawing mechanism 20 to go up and down.

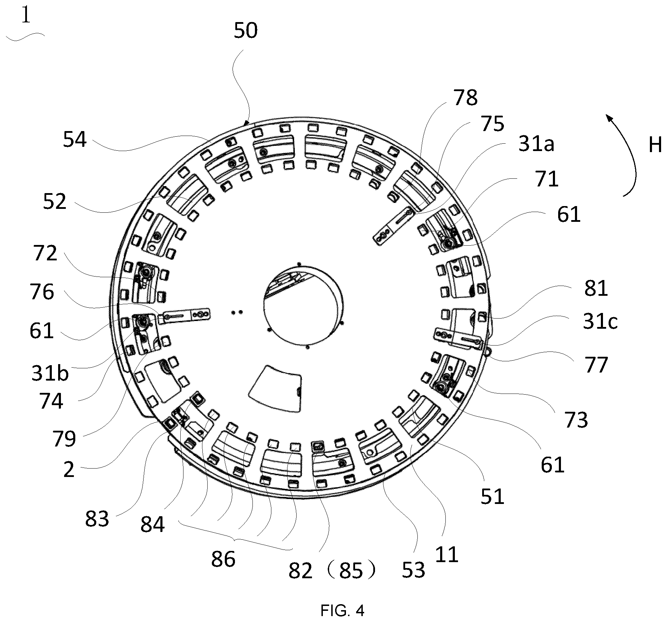

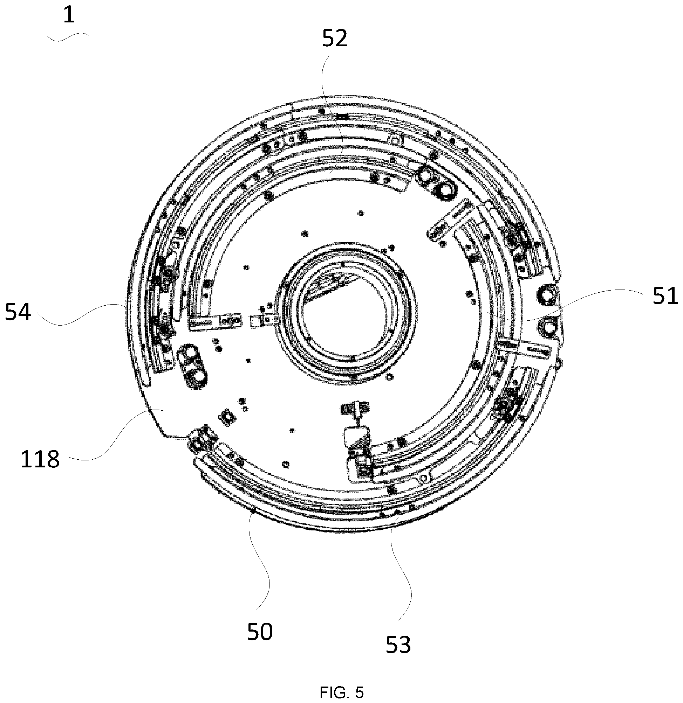

Referring to FIG. 4 again and simultaneously to FIG. 5, the magnetic adsorption mechanism 50 includes a plurality of magnetic adsorption components. The magnetic adsorption components are as many as and in one-to-one correspondence with the waste liquid drawing stations. Each magnetic adsorption component extends to the waste liquid drawing station along the rotation direction of the turntable 11. Each magnetic adsorption component is configured to gather and adsorb the magnetic beads in the reaction vessel 2 on the inner wall of the reaction vessel 2 in the path of the reaction vessel 2 carried within the placement part 111a enters the waste liquid drawing station corresponding to the magnetic adsorption component. In this way, when the reaction vessel 2 enters the waste liquid drawing station corresponding to the magnetic adsorption component and draws waste liquid, the substance to be measured can stay in the reaction vessel 2 along with the magnetic beads for subsequent detection.

The cleaning device 1 has a vessel feeding station 82 and an outer-circle switching station 83. The vessel feeding station 82 refers to an initial station for transferring the reaction vessel 2 after incubation to the turntable 11. The outer-circle switching station 83 refers to a station for transferring the reaction vessel 2 between the inner-circle placement part group 111 and the outer-circle placement part group 112, namely a vessel discharging station for taking the cleaned reaction vessel 2 out of the turntable 11.

The vessel feeding station 82 is located in the rotation path of the inner-circle placement part group 111, and the outer-circle switching station 83 is located in the rotation path of the outer-circle placement part group 112.

There are four magnetic adsorption components. The four magnetic adsorption components are defined as a first magnetic adsorption component 51, a second magnetic adsorption component 52, a third magnetic adsorption component 53 and a fourth magnetic adsorption component 54, respectively. In the rotation direction of the turntable 11, the first magnetic adsorption component 51 extends from a station between the vessel feeding station 82 and the first waste liquid drawing station 71 to the first waste liquid drawing station 71; the second magnetic adsorption component 52 extends from a station between the first uniform mixing station 78 and the second waste liquid drawing station 72 to the second waste liquid drawing station 72; the third magnetic adsorption component 53 extends from a station between the outer-circle switching station 83 and the third waste liquid drawing station 73 to the third waste liquid drawing station 73; and the fourth magnetic adsorption component 54 extends from a station between the third uniform mixing station 81 and the fourth waste liquid drawing station 74 to the fourth waste liquid drawing station 74. It needs to be noted that no magnetic adsorption component needs to be present at each liquid injection station and each uniform mixing station. Thus, it can be guaranteed that when the liquid injection assembly 31 injects the cleaning liquid into the reaction vessel 2 at the corresponding liquid injection station, the gathered magnetic beads can be dispersed, and the uniform mixing assembly can uniformly mix the cleaning liquid with the magnetic beads.

In order to increase the adsorption time of the magnetic adsorption component, the first magnetic adsorption component 51 should be as close to the vessel feeding station 82 as possible; the second magnetic adsorption component 52 should be as close to the first uniform mixing station 78 as possible; the third magnetic adsorption component should be as close to the outer-circle switching station 83 as possible; and the fourth magnetic adsorption component 54 should be as close to the third uniform mixing station 81 as possible. When the turntable 11 rotates once, the reaction vessel 2 at the vessel feeding station 82 can rotate into an adsorption region of the first magnetic adsorption component 51; the reaction vessel 2 at the first uniform mixing station 78 can rotate into an adsorption region of the second magnetic adsorption component 52; the reaction vessel 2 at the outer-circle switching station 83 can rotate into an adsorption region of the third magnetic adsorption component 53; and the reaction vessel 2 at the third uniform mixing station 81 can rotate into an adsorption region of the fourth magnetic adsorption component 54.

Referring to FIGs. 1 and 2 again and simultaneously to FIG. 4, in some embodiments of the present invention, the placement part groups are arranged in two circles and include the inner-circle placement part group 111 and the outer-circle placement part group 112. The cleaning device 1 has inner-circle switching stations 84 and outer-circle switching stations 83; the inner-circle switching stations 84 are disposed in the rotation path of the inner-circle placement part group 111 and located downstream of all the waste liquid drawing stations and all the liquid injection stations corresponding to the inner-circle placement part group 111, and the outer-circle switching stations 83 are disposed in the rotation path of the outer-circle placement part group 112 and located upstream of all the waste liquid drawing stations and all the liquid injection stations corresponding to the outer-circle placement part group 112.

When the reaction vessels 2 at the inner-circle placement part group 111 finish all waste liquid drawing operations and all liquid injection operations corresponding to the inner-circle placement part group 111 in the inner-circle placement part group 111 and move to the inner-circle switching stations 84, the reaction vessels 2 are transferred from the inner-circle switching stations 84 into the placement parts 111a of the outer-circle placement part group 112 at the outer-circle switching stations 83 and continue with the waste liquid drawing and liquid injection operations corresponding to the outer-circle placement part group 112 in the outer-circle placement part group 112.

After finishing all waste liquid drawing operations and all liquid injection operations corresponding to the outer-circle placement part group 112 in the outer-circle placement part group 112 and move to the outer-circle switching stations 83, the reaction vessels 2 are transferred to the measurement device or the inner-circle switching stations 84 of the reaction vessels 2 from the outer-circle switching stations 83.

Taking a one-step detection item as an example, the reaction vessel 2 after reaction on the reaction device is transferred by the transfer device to the inner-circle placement part group 111 and alternately passes through the waste liquid drawing station, the liquid injection station and the uniform mixing station corresponding to the inner-circle placement part group 111. After performing all the waste liquid drawing, liquid injection and uniform mixing operations corresponding to the inner-circle placement part group 111, the placement part 111a carrying the reaction vessel 2 in the inner-circle placement part group 111 moves to the inner-circle switching station 84. Next, the transfer device transfers the reaction vessel 2 at the inner-circle switching station 84 to the placement part 111a at the outer-circle switching station 83 in the outer-circle placement part group 112. Subsequently, the reaction vessel 2 is conveyed by the outer-circle placement part group 112 to alternately pass through the waste liquid drawing station, the liquid injection station and the uniform mixing station corresponding to the outer-circle placement part group 112, and subjected to all the waste liquid drawing operations, liquid injection operations and uniform mixing operations corresponding to the outer-circle placement part group 112. Next, the placement part 111a of the outer-circle placement part group 112 carrying the reaction vessel 2 returns to the outer-circle switching station 83, and the transfer device transfers to the reaction vessel 2 to the measurement device for detection.

Taking a two-step detection item as an example, the two-step detection item differs from the one-step detection item in that when the reaction vessel 2 carried in the outer-circle placement part group 112 that has been subjected to all the waste liquid drawing, liquid injection and uniform mixing operations corresponding to the outer-circle placement part group 112 returns to the outer-circle switching station 83, the transfer device transfers the reaction vessel 2 in the placement part 111a to the placement part 111a of the inner-circle placement part group 111 at the inner-circle switching station 84. Next, the reaction vessel 2 moves from the inner-circle placement part group 111 to a working region in which the transfer device transfers the reaction vessel 2 between the reaction vessel and the cleaning device 1, and then the transfer device transfers the reaction vessel 2 to the reaction device again such that the reaction vessel 2 can be subsequently added with the reagent secondarily for secondary reaction. After the completion of the secondary reaction, the reaction vessel 2 returns to the cleaning device 1 again for secondary cleaning, and is transferred to the measurement device after the completion of cleaning to complete the detection. It needs to be noted that the secondary cleaning operation of the reaction vessel 2 is identical to the operation in the one-step detection time, and therefore will not be described redundantly here.

The secondary reagent addition and secondary reaction operations of the reaction vessel 2 can be performed on the reaction device, or may also be transferred through the reaction device so that the reaction container 2 can move to the injection device and be subjected to the secondary reagent addition operation. Subsequently, the reaction vessel 2 returns to the reaction device for the secondary reaction.

The reaction vessel 2 which finishes the waste liquid drawing, liquid injection and uniform mixing operations in the inner-circle placement part group 111 is transferred through the inner-circle switching station 84 and the outer-circle switching station 83 to the outer-circle placement part group 112 for the waste liquid drawing, liquid injection and uniform mixing operations again. That is to say, after finishing cleaning corresponding to the inner-circle placement part group 111 in the inner-circle placement part group 111, the reaction vessel 2 can be transferred through the inner-circle switching station 84 and the outer-circle switching station 83 into the outer-circle placement part group 112 for remaining cleaning. Since the same reaction vessel 2 can be cleaned repeatedly in the inner-circle placement part group 111 and the outer-circle placement part 111a and the cleaning operation can be simultaneously performed on the reaction vessels 2 in the inner-circle placement part group 111 and the outer-circle placement part group 112, the turntable 11 can be small enough, compact in structure and the cleaning device 1 occupies a small space while the cleaning quality and the cleaning speed are satisfied.

Further, in some embodiments of the present invention, the inner-circle switching stations 84 and the outer-circle switching stations 83 are disposed along the same radial direction of the turntable 11.

In this design, the transfer device can transfer the reaction vessel 2 between the placement part 111a at the inner-circle switching station 84 and the placement part 111a at the outer-circle switching station 83 along the radial direction of the turntable 11. In this way, the transfer path of the reaction vessel 2 between the inner-circle placement part group 111 and the outer-circle placement part group 112 in the cleaning device 1 is the shortest, and the transfer efficiency is high. Accordingly, the detection efficiency of the sample analyzer is also improved.

Under normal circumstances, the measurement device is aligned with the outer-circle switching station 83 in the same radial direction of the turntable 11. The transfer device includes a vessel discharging and grabbing mechanism for transferring the reaction vessel 2 at the outer-circle switching station 83 to the measurement device for detection. When the inner-circle switching station 84 and the outer-circle switching station 83 are disposed along the same radial direction of the turntable 11, the vessel discharging and grabbing mechanism can also grab the reaction vessel 2 to transfer between the outer-circle switching station 83 and the inner-circle switching station 84. That is to say, transferring the reaction vessel 2 between the inner-circle placement part group 111 and the outer-circle placement part group 112 and taking out the reaction vessel 2 are carried out by the same vessel discharging and grabbing mechanism so that the structure of the sample analyzer 1 can be simplified.

In some embodiments of the present invention, the cleaning device 1 has auxiliary vessel discharging stations 85. The vessel feeding stations 82 and the auxiliary vessel discharging stations 85 are all disposed in the rotation path of the inner-circle placement part group 111; and the vessel feeding stations 82 are located upstream of all the waste liquid drawing stations and all the liquid injection stations corresponding to the inner-circle placement part group 111, while the auxiliary vessel discharging stations 85 are located downstream of all the waste liquid drawing stations and all the liquid injection stations corresponding to the inner-circle placement part group 111.

The vessel feeding stations 82 are configured to receive the reaction vessels 2 transferred from the reaction device; and when finishing all waste liquid drawing operations and all liquid injection operations corresponding to the outer-circle placement part group 112 in the outer-circle placement part group 112 and moving to the outer-circle switching stations 83, the reaction vessels 2 are transferred from the outer-circle switching stations 83 through the inner-circle switching stations 84 to the auxiliary vessel discharging stations 85, and output to the reaction device from the auxiliary vessel discharging stations 85.

The vessel feeding station 82 is located within the working region in which the transfer device transfers the reaction vessel 2 between the reaction vessel and the cleaning device 1.

The auxiliary vessel discharging station 85 may coincide with the vessel feeding station 82, or the auxiliary vessel discharging station 85 may also be spaced apart from the vessel feeding station 82, which may be specifically disposed as needed. In the two-step detection item, the reaction vessel 2 on the reaction device is transferred by the transfer device to the placement part 111a of the inner-circle placement part group 111 at the vessel feeding station 82, and after finishing cleaning corresponding to the inner-circle placement part group 111 on the inner-circle placement part group 111, transferred through the inner-circle switching station 84 and the outer-circle switching station 83 into the outer-circle placement part group 112 for remaining cleaning.

Next, after the reaction vessel 2 finishes the cleaning corresponding to the outer-circle placement part group 112, the reaction vessel 2 is switched from the placement part 111a at the outer-circle switching station 83 to the placement part 111a of the inner-circle placement part group 111 at the inner-circle switching station 84. The turntable 11 then rotates and conveys the reaction vessel 2 to the auxiliary vessel discharging station 85. Next, the transfer device transfers the reaction vessel 2 in the placement part 111a at the auxiliary vessel discharging station 85 to the reaction device again.

By designing that the vessel feeding station 82 and the auxiliary vessel discharging station 85 are both disposed in the rotation path of the inner-circle placement part group 111, the transfer of the reaction vessel 2 between the reaction device and the cleaning device 1 can be realized in the same circle, which is convenient for the transfer device to operate and conducive to improving the compactness of the layout of the sample analyzer.

Further, in some embodiments of the present invention, the auxiliary vessel discharging station 85 coincides with the vessel feeding station 82.

In this design, the path of the transfer device transferring the reaction vessel 2 from the reaction device to the cleaning device 1 is identical to the path of transferring from the cleaning device 1 to the reaction device. The motion path of the transfer device is simpler; meanwhile, the structure of the transfer device is simplified, which is conducive to reducing the occupied space of the sample analyzer.

In some embodiments of the present invention, the cleaning device 1 further has transitional stations 86. The transitional stations 86 are disposed in the rotation path of the inner-circle placement part group 111 and located between the inner-circle switching stations 84 and the auxiliary vessel discharging stations 85. When finishing all waste liquid drawing operations and all liquid injection operations corresponding to the outer-circle placement part group 112 in the outer-circle placement part group 112 and moving to the outer-circle switching stations 83, the reaction vessels 2 are first transferred from the outer-circle switching stations 83 to the inner-circle switching stations 84 and then move to the auxiliary vessel discharging stations 85 through the transitional stations 86. When the reaction vessels 2 are located at the transitional stations 86, the cleaning device 1 is merely configured to convey the reaction vessels 2.

The transitional stations 86 are configured to transition the reaction vessels 2 at the inner-circle switching stations 84 to the auxiliary vessel discharging stations 85 such that the reaction vessels 2 are removed out of the reaction device from the auxiliary vessel discharging stations 85.

Since four waste liquid drawing operations have been performed on the reaction vessels 2 at the transitional stations 86, there is no need to dispose magnetic adsorption components at the transitional stations 86. The transitional stations 86 can make use of vacant stations between the inner-circle switching stations 84 and the auxiliary vessel discharging stations 85 for transferring reaction vessels 2, achieving the maximum use of the stations.

The working process of the whole cleaning device 1 is described in detail below.

A reaction vessel 2 after incubation is transferred under the action of the transfer device to the inner-circle placement part group 111 and rotates to the placement 111a at the vessel feeding station 82. Subsequently, the turntable 11 rotates and drives the reaction vessel 2 to sequentially go past the first waste liquid drawing station 71, the first liquid injection station 75, the first uniform mixing station 78, the second waste liquid drawing station 72, the second liquid injection station 76 and the second uniform mixing station 79.

In the process of the reaction vessel 2 moving to the first waste liquid drawing station 71, the magnetic beads in the reaction vessel 2 are gathered under the action of the first magnetic adsorption component 51. When the reaction vessel 2 moves to the first waste liquid drawing station 71, the first waste liquid drawing assembly 21a goes down, the first waste liquid drawing needle 212 in the first waste liquid drawing assembly 21a extends into the reaction vessel 2 and draws the waste liquid after reaction out of the reaction vessel 2. Meanwhile, the second waste liquid drawing needle 213 in the first waste liquid drawing assembly 21a extends into the first cleaning station through the aligned through hole 113a for cleaning. Since the first magnetic adsorption component 51 can gather and adsorb the magnetic beads on the inner wall of the reaction vessel 2, the magnetic beads and the substance to be measured are still remained in the reaction vessel 2 after the first waste liquid drawing needle 212 finishes working. Subsequently, the first waste liquid drawing assembly 21a goes up, the first waste liquid drawing needle 212 in the first waste liquid drawing assembly 21a goes back to the first switching station, and the second waste liquid drawing needle 213 in the first waste liquid drawing assembly 21a goes back to the second switching station.

After the completion of waste liquid drawing at the first waste liquid drawing station 71, the reaction vessel 2 is driven by the turntable 11 to enter the first liquid injection station 75 for liquid injection. In the process of the reaction vessel 2 entering the first liquid injection station 75, the first waste liquid drawing assembly 21a rotates such that the first waste liquid drawing needle 212 moves to the second switching station and the second waste liquid drawing needle 213 moves to the first switching station. Then, when next reaction vessel 2 enters the first waste liquid drawing station 71, the second waste liquid drawing needle 213 goes down and extends into the next reaction vessel 2 to draw the waste liquid, and the first waste liquid drawing needle 212 enters the first cleaning station through the aligned through hole 113a for cleaning. At this point, the first waste liquid drawing assembly 21a completes a waste liquid drawing cycle, and then the waste liquid drawing is circularly performed on the reaction vessel 2 entering the first waste liquid drawing station 71 according to the cyclical mode.

After the reaction vessel 2 enters the first liquid injection station 75, the first liquid injection assembly 31a injects the cleaning liquid into the reaction vessel 2 and disperses the magnetic beads so that the cleaning liquid can be in full contact with the magnetic beads and the substance to be measured can be separated from the impurities and cleaned. Next, the turntable 11 rotates, and the reaction vessel 2 sequentially passes through the first uniform mixing station 78, the second waste liquid drawing station 72, the second liquid injection station 76 and the second uniform mixing station 79. The first uniform mixing assembly uniformly mixes the cleaning liquid and the magnetic beads in the reaction vessel 2 at the first uniform mixing station 78. The second waste liquid drawing assembly 21b draws the waste liquid after cleaning out of the reaction vessel 2 at the second waste liquid drawing station 72. The liquid injection assembly 31b injects the cleaning liquid into the reaction vessel 2 at the second liquid injection station 76. The second uniform mixing assembly uniformly mixes the cleaning liquid and the magnetic beads in the reaction vessel 2 at the second uniform mixing station 79.

Then, the placement part 111a in the inner-circle placement part group 111 that carries the reaction vessel 2 moves to the inner-circle switching station 84, and the transfer device transfers the reaction vessel 2 to the placement part 111a of the outer-circle placement part group 112 at the outer-circle switching station 83. Driven by the turntable 11, the reaction vessel 2 sequentially passes through the third waste liquid drawing station 73, the third liquid injection station 77, the third uniform mixing station 81 and the fourth waste liquid drawing station 74.

It needs to be noted that the operating modes of the second waste liquid drawing assembly 21b, the third waste liquid drawing assembly 21c and the fourth waste liquid drawing assembly 21d are the same as the operating mode of the first waste liquid drawing assembly 21a, the operating modes of the second liquid injection assembly 31b and the third liquid injection assembly 31c are the same as the operating mode of the first liquid injection assembly 31a, and the operating modes of the second uniform mixing assembly and the third uniform mixing assembly are the same as the operating mode of the first uniform mixing assembly. Therefore, the specific working processes of the reaction vessel 2 at the second waste liquid drawing station 72, the second liquid injection station 76, the second uniform mixing station 79, the third waste liquid drawing station 73, the third liquid injection station 77, the third uniform mixing station 81 and the fourth waste liquid drawing station 74 are not described redundantly here.

In the one-step detection item, after the reaction vessel 2 out of which the waste liquid has been drawn at the fourth waste liquid drawing station 74 moves to the outer-circle switching station 83, it is transferred from the outer-circle switching station 83 to the measurement device for detection.

In the two-step detection item, after the reaction vessel 2 out of which the waste liquid has been drawn at the fourth waste liquid drawing station 74 moves to the outer-circle switching station 83, it is transferred to the placement part 111a of the inner-circle placement part group 111 at the inner-circle switching station 84 again. Then, the reaction vessel 2 is driven by the turntable 11 to pass through the transitional station 86 and moves to the auxiliary vessel discharging station 85, i.e., the vessel feeding station 82, and the transfer device transfers the reaction vessel 2 at the auxiliary vessel discharging station 85 to the reaction device again. After the completion of the secondary reagent addition and the secondary reaction for the reaction vessel 2, the reaction vessel 2 goes back to the placement part 111a at the vessel feeding station 82 again and repeatedly passes through the first waste liquid drawing station 71, the first liquid injection station 75, the first uniform mixing station 78, the second waste liquid drawing station 72, the second liquid injection station 76, the second uniform mixing station 79, the third waste liquid drawing station 73, the third liquid injection station 77, the third uniform mixing station 81 and the fourth waste liquid drawing station 74, and is taken out from the outer-circle switching station 83.

The same reaction vessel 2 is subjected to repeated waste liquid drawing and liquid injection so that the substance to be measured can be separated from the impurities and cleaned, facilitating subsequent detection of the substance to be measured.

In the whole cleaning process, in the same time period, different waste liquid drawing assemblies 21 draw the waste liquid out of the reaction vessels 2 at their respective waste liquid drawing stations, respectively; different liquid injection assemblies 31 inject the cleaning liquid into the reaction vessels 2 at their respective liquid injection stations, respectively; and different uniform mixing assemblies uniformly mix the cleaning liquid with the magnetic beads in the reaction vessels 2 at their respective uniform mixing stations, respectively. In this way, the cleaning device 1 can separate and clean a plurality of reaction vessels 2 simultaneously. The cleaning efficiency is high. In the process of the waste liquid drawing assembly 21 drawing the waste liquid and the liquid injection assembly 31 injecting the cleaning liquid, the turntable 11 is still.

In the prior art, only one circle of placement part group is disposed on the turntable 11. In order to increase the cleaning speed of the cleaning device 1, the time for the turntable 11 to stop when rotating intermittently is shortened. However, in order to guarantee the cleaning effect, it needs to ensure that the time for the reaction vessel 2 to pass through the magnetic adsorption component cannot be changed. The length of the magnetic adsorption component in the circumferential direction of the turntable 11 needs to be increased. Thus, the perimeter of the turntable 11 certainly will be increased. Correspondingly, reaction vessels 2 that can be accommodated on the turntable 11 can be increased, leading to an increased size and an increased occupied space of the cleaning device 1.

In the present invention, a plurality of circles of placement part groups for placement of reaction vessels 2 are formed on the turntable 11. In practical operation, reaction vessels 2 accommodated by a single circle of the placement part group can be dispersed to the plurality of circles of placement part groups such that the reaction vessels 2 accommodated on each circle of the placement part group are decreased. In this way, even though the turntable 11 speeds up, since the reaction vessels 2 on each circle of the placement part group are decreased, the time for the reaction vessels 2 to pass through the magnetic adsorption component can be guaranteed without increasing a length of the magnetic adsorption component. That is to say, even though the turntable 11 speeds up, it can be guaranteed that the duration for the reaction vessels 2 to pass through the magnetic adsorption component meets the requirement without increasing the length of the magnetic adsorption component and the perimeter of the turntable 11. In this design, the cleaning device 1 has a small size and occupies a small space.

The technical features of the foregoing embodiments can be combined arbitrarily. For brevity of description, not all possible combinations of the technical features of the foregoing embodiments are described. However, the combinations of the technical features should be construed as falling within the scope described in this specification as long as there is no contradiction in the combinations.

Only several implementations of the present invention are described in detail in the foregoing embodiments, but they should not therefore be construed as limiting the scope of the present invention. It should be noted that those of ordinary skill in the art can further make variations and improvements without departing from the conception of the present invention. These variations and improvements all fall within the protection scope of the present invention. Therefore, the protection scope of the present invention should be subject to the protection scope defined by the claims.

## Claims

1. A turntable mechanism, comprising a turntable (11), wherein a plurality of circles of placement part groups for placement of reaction vessels (2) are formed on the turntable (11); all the placement part groups are disposed at intervals from inside to outside along a radial direction of the turntable (11); at least one circle of through hole group (113) is formed between every two adjacent circles of the placement part groups; and all placement parts (111a) in each circle of the placement part group of the plurality of circles of placement part groups and all through holes (113a) in each circle of the through hole group (113) are arranged at intervals along a circumferential direction of the turntable (11);
wherein each circle of the placement part group and each circle of the through hole group (113) are both disposed concentrically with the turntable (11).

2. The turntable mechanism according to claim 1, wherein one of every two adjacent circles of the placement part groups is an inner-circle placement part group (111), and the other one is an outer-circle placement part group (112); the outer-circle placement part group (112) is disposed around the inner-circle placement part group (111);
all placement parts (111a) of the inner-circle placement part group (111) are disposed in one-to-one correspondence and collinearly with all placement parts (111a) of the outer-circle placement part group (112) in the radial direction of the turntable (11); and
each of the through holes (113a) in each circle of the through hole group (113) between the inner-circle placement part group (111) and the outer-circle placement part group (112), within a length range of the through hole (113a) along the circumferential direction of the turntable (11), corresponds to at least one of the placement parts (111a) of the inner-circle placement part group (111) in the radial direction of the turntable (11).

3. The turntable mechanism according to claim 2, wherein each of the through holes (113a) in each circle of the through hole group (113) between the inner-circle placement part group (111) and the outer-circle placement part group (112), within a length range of the through hole (113a) along the circumferential direction of the turntable (11), corresponds to at least two of the placement parts (111a) of the inner-circle placement part group (111) in the radial direction of the turntable (11).

4. The turntable mechanism according to claim 2, wherein each of the through holes (113a) in each circle of the through hole group (113) between the inner-circle placement part group (111) and the outer-circle placement part group (112) is disposed in one-to-one correspondence and collinearly with each of the placement parts (111a) of the inner-circle placement part group (111) in the radial direction of the turntable (11).

5. The turntable mechanism according to any one of claims 1 to 4, further comprising a turntable driving assembly which comprises a turntable motor (114), a turntable driving wheel (115), a turntable driven wheel (116) and a turntable synchronous belt (117), wherein the turntable motor (114) is in transmission connection with the turntable driving wheel (115); the turntable synchronous belt (117) is sleeved outside the turntable driving wheel (115) and the turntable driven wheel (116); and the turntable driven wheel (116) is fixedly connected with the turntable (11).

6. A cleaning device, comprising:
the turntable mechanism according to any one of claims 1 to 5;
a waste liquid drawing mechanism (20) comprising N waste liquid drawing assemblies (21), wherein each of the waste liquid drawing assemblies (21) comprises a waste liquid drawing needle, and N≥2; and
a liquid injection mechanism (30) comprising (N-1) liquid injection assemblies (31);
wherein the cleaning device has N waste liquid drawing stations, N cleaning stations and (N-1) liquid injection stations; all the waste liquid drawing stations and all the cleaning stations are in one-to-one correspondence with all the waste liquid drawing assemblies (21), and all the liquid injection stations are in one-to-one correspondence with all the liquid injection assemblies (31);
each circle of the placement part group corresponds to at least one of the waste liquid drawing assemblies (21) and at least one of the liquid injection assemblies (31); different circles of the placement part groups correspond to different waste liquid drawing assemblies (21) and different liquid injection assemblies (31); each circle of the through hole group (113) corresponds to at least one of the cleaning stations, and different circles of the through hole groups (113) correspond to different cleaning stations; and
the waste liquid drawing stations and the liquid injection stations are disposed alternately along a rotation direction of the turntable (11).

7. The cleaning device according to claim 6, further comprising N first switching stations and N second switching stations, wherein all the first switching stations and all the second switching stations are located on a top side of the turntable (11), and all the first switching stations and all the second switching stations are in one-to-one correspondence with all the waste liquid drawing assemblies (21); the first switching station and the waste liquid drawing station corresponding to a same one of the waste liquid drawing assemblies (21) are aligned with the second switching station and the cleaning station corresponding to the same one of the waste liquid drawing assemblies (21) in an axial direction of the turntable (11); and the waste liquid drawing assembly (21) is controlled to move and the waste liquid drawing needle of the waste liquid drawing assembly (21) is switched between a corresponding first switching station and a corresponding second switching station;
the cleaning device further comprises a lifting mechanism (40), wherein the lifting mechanism (40) is in transmission connection with the waste liquid drawing mechanism (20) and is configured to drive the waste liquid drawing mechanism (20) to go up and down along the axial direction of the turntable (11);
in a process of the waste liquid drawing mechanism (20) going up, the waste liquid drawing needle in the waste liquid drawing assemblies (21) move from a corresponding waste liquid drawing station to the corresponding first switching station, or move from a corresponding cleaning station to the corresponding second switching station; and
in a process of the waste liquid drawing mechanism (20) going down, the waste liquid drawing needle in the waste liquid drawing assemblies (21) move from the corresponding first switching station to the corresponding waste liquid drawing station, or move from the corresponding second switching station to the corresponding cleaning station.

8. The cleaning device according to claim 7, wherein the waste liquid drawing mechanism (20) further comprises a waste liquid drawing driving assembly (22); and the waste liquid drawing driving assembly (22) is in transmission connection with all the waste liquid drawing assemblies (21) and is configured to synchronously drive all the waste liquid drawing assemblies (21) to rotate or translate such that the waste liquid drawing needles of the waste liquid drawing assemblies (21) are switched between corresponding first switching stations and second switching stations.

9. The cleaning device according to claim 6, wherein the placement part groups are arranged in two circles and comprise an inner-circle placement part group (111) and an outer-circle placement part group (112);
the cleaning device has an inner-circle switching station (84) and an outer-circle switching station (83); the inner-circle switching station (84) is disposed in a rotation path of the inner-circle placement part group (111) and located downstream of all the waste liquid drawing stations and all the liquid injection stations corresponding to the inner-circle placement part group (111), and the outer-circle switching station (83) are disposed in a rotation path of the outer-circle placement part group (112) and located upstream of all the waste liquid drawing stations and all the liquid injection stations corresponding to the outer-circle placement part group (112); and
when the reaction vessels (2) at the inner-circle placement part group (111) finish all waste liquid drawing operations and all liquid injection operations corresponding to the inner-circle placement part group (111) in the inner-circle placement part group (111) and move to the inner-circle switching station (84), the reaction vessels (2) are transferred from the inner-circle switching station (84) into the placement parts (111a) of the outer-circle placement part group (112) at the outer-circle switching station (83) and continue with the waste liquid drawing and liquid injection operations corresponding to the outer-circle placement part group (112) in the outer-circle placement part group (112).

10. The cleaning device according to claim 9, wherein the inner-circle switching stations (84) and the outer-circle switching stations (83) are disposed along a same radial direction of the turntable (11).

11. The cleaning device according to claim 9 or 10, having a vessel feeding station (82) and an auxiliary vessel discharging station (85), wherein the vessel feeding station (82) and the auxiliary vessel discharging station (85) are all disposed in the rotation path of the inner-circle placement part group (111); and the vessel feeding station (82) is located upstream of all the waste liquid drawing stations and all the liquid injection stations corresponding to the inner-circle placement part group (111), while the auxiliary vessel discharging station (85) is located downstream of all the waste liquid drawing stations and all the liquid injection stations corresponding to the inner-circle placement part group (111);
the vessel feeding station (82) is configured to receive reaction vessels (2) transferred from a reaction device; and when finishing all waste liquid drawing operations and all liquid injection operations corresponding to the outer-circle placement part group (112) in the outer-circle placement part group (112) and moving to the outer-circle switching station (83), the reaction vessels (2) are transferred from the outer-circle switching station (83) through the inner-circle switching station (84) to the auxiliary vessel discharging station (85), and output to the reaction device from the auxiliary vessel discharging station (85).

12. The cleaning device according to claim 11, wherein the auxiliary vessel discharging station (85) coincides with the vessel feeding station (82).

13. The cleaning device according to claim 11, further having a transitional station (86), wherein the transitional station (86) is disposed in a rotation path of the inner-circle placement part group (111) and located between the inner-circle switching station (84) and the auxiliary vessel discharging station (85);
when finishing all waste liquid drawing operations and all liquid injection operations corresponding to the outer-circle placement part group (112) in the outer-circle placement part group (112) and moving to the outer-circle switching station (83), the reaction vessels (2) are first transferred from the outer-circle switching station (83) to the inner-circle switching station (84) and then moved to the auxiliary vessel discharging station (85) through the transitional station (86); and
when the reaction vessels (2) are located at the transitional station (86), the cleaning device is only configured to convey the reaction vessels (2).

14. A sample analyzer, comprising the cleaning device according to any one of claims 6 to 13.
